(19) Europäisches Patentamt
European Patent Office
Office européen des brevets

(11) **EP 2 148 481 A1**

(12) **DEMANDE DE BREVET EUROPEEN**

(43) Date de publication:
**27.01.2010 Bulletin 2010/04**

(51) Int Cl.:
**H04L 25/06** (2006.01)   **H03D 3/00** (2006.01)

(21) Numéro de dépôt: **08305422.1**

(22) Date de dépôt: **25.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(72) Inventeurs:
• **Hue, Antoine**
  **01630, SAINT GENIS POUILLY (FR)**
• **Della-Monica, Gabriel**
  **38430, MOIRANS (FR)**
• **Sibille, Florent**
  **38000, GRENOBLE (FR)**

(71) Demandeurs:
• **STMicroelectronics N.V.**
  **1118 BH  Amsterdam (NL)**
• **STMicroelectronics (Grenoble) SAS**
  **38000 Grenoble (FR)**
• **STMicroelectronics SA**
  **92120 Montrouge (FR)**

(74) Mandataire: **Zapalowicz, Francis**
  **Bureau Casalonga & Josse**
  **Bayerstrasse 71/73**
  **80335 München (DE)**

(54) **Procédé et dispositif de traitement du décalage en courant continu d'une chaîne de réception radiofréquence avec plusieurs amplificateurs variables**

(57)   La partie analogique (ETA) de la chaîne de réception (CHRX) étant partitionnée en plusieurs zones (Z1,Z2), le dispositif de traitement comprend des moyens d'étalonnage aptes à effectuer une détermination de la compensation élémentaire de décalage en courant continu à appliquer dans une zone, des moyens de commande (MCM) aptes à limiter les gains d'amplification des autres zones à leurs valeurs minimales, des moyens de contrôle (MCTL) aptes, pour chaque zone, à activer les moyens d'étalonnage et les moyens de commande, et des moyens de détermination aptes à déterminer la compensation de décalage en courant continu à appliquer à ladite chaîne à partir des compensations élémentaires déterminées pour chaque zone.

FIG.1

**Description**

L'invention concerne notamment le traitement des imperfections d'une chaîne de réception radiofréquence et plus particulièrement le décalage en courant continu (communément désigné par l'homme du métier sous la dénomination anglo-saxonne de « DC offset »).

Le décalage en courant continu est un défaut bien connu des chaînes de réception radiofréquence, plus particulièrement de celles dites « à conversion directe », aussi dénommées « à fréquence intermédiaire nulle » (Zero Intermediate Frequency, ZIF, selon une dénomination anglo-saxonne bien connue de l'homme du métier).

Il est en effet préférable de compenser ce décalage en courant continu avant d'effectuer une opération de démodulation afin d'améliorer les performances globales du traitement de réception. Un décalage en courant continu trop important non compensé dans la partie analogique nécessite une dynamique de convertisseur analogique/numérique importante ce qui est préjudiciable

Une cause de ce décalage en courant continu réside dans la fuite de signal d'oscillateur local (signal de transposition) destiné à l'étage de transposition de la chaîne (mélangeur), au niveau de l'entrée de l'amplificateur faible bruit de cette chaîne ainsi qu'à l'entrée du mélangeur lui-même. Ce signal de fuite est par conséquent amplifié puis multiplié par lui-même dans le mélangeur pour créer ce décalage en courant continu.

Par ailleurs, tous les éléments de la chaîne ayant un gain sont de nature à amplifier ce décalage en courant continu.

Essentiellement, jusqu'à ce jour, deux types de solution ont été proposés pour supprimer ce décalage en courant continu.

Un premier type de solution consiste à utiliser un traitement de filtrage passe-haut. Cependant, une telle solution nécessite un ajustement précis de la fréquence de coupure et de la réponse en phase du filtre ce qui peut conduire à des conceptions de filtres relativement coûteuses et encombrantes.

Par ailleurs, les filtres analogiques requièrent un étalonnage pour ajuster les fréquences de coupure. Afin d'éviter un étalonnage en usine, qui s'avère coûteux, on préfère utiliser un étalonnage sur puce. Mais, de tels filtres analogiques réglables présentent une surface bien plus importante que celle de la puce elle-même.

Le deuxième type de solution vise plus à compenser le décalage en courant continu, d'une façon analogique ou numérique, plutôt que de le supprimer à travers un filtrage.

La façon la plus facile d'estimer le décalage en courant continu est de le faire durant une période de silence, c'est-à-dire pendant une période durant laquelle aucun signal n'est présent à l'antenne. En effet, dans ces conditions, le seul signal présent dans la chaîne de réception est le décalage en courant continu qu'il devient alors facile d'estimer par exemple en utilisant un filtre passe-bas de faible complexité.

Cependant, une telle solution nécessite la présence et la connaissance des périodes de silence ce qui implique une synchronisation partielle ou totale du réseau ou bien un réseau à faible trafic.

Mais, dans certains cas, les périodes de silence sont inexistantes ou bien très courtes par comparaison aux périodes de transmission effective, comme c'est par exemple le cas dans les systèmes cellulaires fonctionnant conformément aux normes WiMAX.

On rappelle ici que les normes WiMAX (acronyme pour « Worlwide Interoperability for Microwave Access »), sont une famille de normes définissant les connexions à haut débit par voie hertzienne destinées principalement à des architectures point-multipoints. Les normes WiMAX comportent notamment les normes de la famille 802.16.

Une autre façon de faire pour estimer le décalage en continu consiste à synchroniser tout d'abord le récepteur et à effectuer ensuite une estimation de ce décalage en courant continu en utilisant par exemple les moyens de transformée de Fourier directe (FFT) du récepteur, par exemple un récepteur OFDM (acronyme anglosaxon pour « Orthogonal Frequency Division Multiplexing).

Cependant, avec une telle solution, la synchronisation est effectuée en présence d'un niveau élevé de décalage en courant continu (qui peut parfois aller jusqu'à 50% de la plage de fonctionnement du convertisseur analogique numérique) ce qui implique l'utilisation de filtres numériques pour supprimer le décalage en courant continu tout en effectuant une recherche de cellule ou de signal incident et en diminuant le gain de l'étage analogique afin d'éviter une saturation de l'étage de conversion analogique numérique.

En conséquence, le niveau du signal et le niveau du signal sur bruit (SNR) diminuent entraînant de ce fait une diminution de la sensibilité du récepteur.

La plupart des normes de communication sans fil utilisant une modulation du type OFDM ont pris en compte ce problème de « l'auto-mélange » (« auto-transposition ») du signal d'oscillateur local donnant lieu à la création du décalage en courant continu. En effet, dans de telles normes de transmission, il n'y a aucun signal transmis sur la fréquence zéro (DC frequency). En conséquence, le décalage en courant continu n'a aucun effet pour autant que la fréquence porteuse de l'émetteur et la fréquence porteuse du récepteur soient parfaitement synchronisées.

Mais d'une part ceci n'est pas le cas avant synchronisation et d'autre part une synchronisation parfaite est par conséquent requise ce qui est un cas idéal qui ne se produit pas en pratique.

Aussi le niveau de décalage en courant continu doit-il être réduit dans les systèmes OFDM pour diminuer l'impact du décalage de fréquence porteuse et d'interférence interporteuse.

En outre, la présence de cette composante de décalage en courant continu dans le signal numérique a un impact sur le dimensionnement de la partie numérique du récepteur.

En conséquence, la plupart des récepteurs radiofréquence, et en particulier les récepteurs du type à conversion directe, sont très soigneusement étudiés de façon à minimiser cette autotransposition du signal d'oscillateur local de façon à réduire le niveau de décalage en courant continu. Mais, une telle minimisation n'est pas encore suffisante et nécessite par conséquent une estimation du niveau de décalage en courant continu dans le but de le compenser autant que possible.

Par ailleurs, si l'on se place dans le contexte d'un récepteur WiMAX, certaines applications requièrent d'effectuer le traitement du décalage en courant continu avant toute synchronisation, la synchronisation n'étant possible que si les imperfections du signal sont réduites

Selon un mode de mise en oeuvre et de réalisation, il est proposé un procédé et un dispositif de traitement du décalage en courant continu d'une chaîne de réception radiofréquence évitant l'utilisation d'un filtrage continu passe-haut.

Selon un autre mode de mise en oeuvre et de réalisation, il est proposé un procédé et un dispositif de traitement du décalage en courant continu d'une chaîne de réception radiofréquence s'affranchissant de la nécessité d'utiliser une période de silence de transmission et s'affranchissant de la nécessité d'une synchronisation partielle ou totale du réseau.

Selon un autre mode de mise en oeuvre et de réalisation, il est proposé un procédé et un dispositif permettant d'estimer et de compenser le décalage en courant continu en présence d'un signal large bande non déterministe au niveau de l'antenne, avant synchronisation, dans une architecture de type à conversion directe.

Selon un autre mode de mise en oeuvre et de réalisation, il est proposé un schéma de compensation du décalage en courant continu dans un système du type TDD ou du type FDD (fréquence distincte pour l'émission et la réception) ou du type TDMA (acronyme anglo-saxon pour « Time Division Multiple Access) sans synchronisation de réseau.

Selon un aspect, il est proposé un procédé de traitement du décalage en courant continu d'une chaîne de réception radiofréquence, le procédé comprenant un partitionnement de la partie analogique de la chaîne de réception en plusieurs zones et, pour chaque zone, un étalonnage de la compensation élémentaire de décalage en courant continu à appliquer à ladite chaîne dans une plage de fonctionnement de ladite zone, la plage de fonctionnement des autres zones étant limitées à une plage de fonctionnement dite minimale, et une détermination de la compensation de décalage en courant continu à appliquer à ladite chaîne dans toute sa plage de fonctionnement à partir desdites compensations élémentaires.

Ainsi, selon cet aspect, on étalonne séparément les différentes zones de la partie analogique de la chaîne de réception et on effectue ensuite un traitement de consolidation en prenant notamment en compte des combinaisons de gain possibles.

Ainsi, il devient possible, par cette « séparation » des zones, de mesurer et de compenser le décalage en courant continu (DC offset) sans se préoccuper de savoir si un signal est présent ou non à l'entrée de la chaîne de réception et en évitant ainsi toute saturation ou influence parasite des différents étages et en particulier de l'étage de conversion analogique numérique de la chaîne de réception.

Selon un mode de mise en oeuvre, la partie analogique comprenant un étage de conversion analogique-numérique, on choisit les caractéristiques de la plage de fonctionnement minimale de chaque zone de façon à éviter une saturation de l'étage de conversion analogique-numérique.

La plage de fonctionnement minimale d'une zone peut comprendre un arrêt du fonctionnement de cette zone ou bien un fonctionnement de cette zone avec un gain minimal ou un gain pouvant varier dans une plage de gains réduite délimitée par ladite valeur minimale et une valeur limite.

Selon un mode de mise en oeuvre, on arrête le fonctionnement des zones situées en amont de la zone à étalonner, ce qui permet notamment d'augmenter l'isolation vis-à-vis de l'antenne, tandis qu'on fait fonctionner les zones situées en aval de la zone à étalonner avec un gain minimal ou dans une plage de gains réduite, ce qui contribue à éviter une saturation de l'étage de conversion analogique-numérique.

Selon un mode de mise en oeuvre, l'étalonnage de la compensation élémentaire d'une zone comprend la détermination d'un jeu de valeurs de compensation élémentaire à injecter dans la chaîne, et la détermination de la compensation de décalage en courant continu à appliquer à ladite chaîne dans toute sa plage de fonctionnement comportent des sommations, éventuellement pondérées, desdites valeurs de compensation élémentaire.

Ainsi, par exemple, l'étalonnage de la compensation élémentaire d'une zone comprend une variation du gain de ladite zone et, pour chaque valeur de gain, une détermination d'une valeur de compensation élémentaire à injecter dans la chaîne.

L'invention s'applique tout particulièrement, mais non limitativement, à une chaîne de réception du type à conversion directe.

Une telle chaîne comporte par exemple un premier étage d'amplification, par exemple un étage d'amplification à faible bruit, couplé à l'antenne de la chaîne, un étage de transposition de fréquence couplé au premier étage d'amplification, et un deuxième étage d'amplification couplé entre l'étage de transposition de fréquence et un étage de conversion analogique-numérique. On partitionne alors par exemple la chaîne en une première zone incorporant le premier étage d'amplification et l'étage de transposition de fréquences et en une deuxième zone incorporant le deuxième étage d'amplification et l'étage de conversion analogique-numérique.

Selon un autre aspect, il est proposé un dispositif de traitement du décalage en courant continu d'une chaîne de réception radiofréquence. Selon une caractéristique générale de cet autre aspect, la partie analogique de la chaîne de réception étant partitionnée en plusieurs zones, le dispositif comprend des moyens d'étalonnage aptes à effectuer un étalonnage de la compensation élémentaire de décalage en courant continu à appliquer à ladite chaîne dans la plage de fonctionnement d'une zone, des moyens de commande aptes à limiter la plage de fonctionnement d'une zone à une plage de fonctionnement minimale, des moyens de contrôle aptes, pour chaque zone, à activer les moyens d'étalonnage et activer les moyens de commande pour les autres zones, et des moyens de détermination aptes à déterminer la compensation de décalage en courant continu à appliquer à ladite chaîne dans toute sa plage de fonctionnement à partir desdites compensations élémentaires.

Selon un mode de réalisation, ladite partie analogique comprend un étage de conversion analogique-numérique, et les caractéristiques de la plage de fonctionnement minimale de chaque zone sont choisies de façon à éviter une saturation de l'étage de conversion analogique numérique.

Les moyens de commande peuvent être aptes à arrêter le fonctionnement d'une zone ou à la faire fonctionner avec un gain minimal ou avec un gain pouvant varier dans une plage de gains réduite délimitée par ladite valeur minimale et une valeur limite.

Selon un mode de réalisation, les moyens de commande sont aptes à arrêter le fonctionnement des zones situées en amont de la zone à étalonner et à faire fonctionner les zones situées en aval de la zone à étalonner avec un gain minimal ou dans la plage de gains réduite.

Selon un mode de réalisation, les moyens d'étalonnage sont aptes à déterminer pour une zone un jeu de valeurs de compensation élémentaires à injecter dans la chaîne, et lesdits moyens de détermination comportent des moyens de sommation aptes à effectuer des sommations, éventuellement pondérées, desdites valeurs de compensations élémentaires.

Ainsi, par exemple, les moyens d'étalonnage peuvent comprendre des premiers moyens aptes à faire varier le gain d'une zone et des deuxièmes moyens aptes, pour chaque valeur de gain, à déterminer une valeur élémentaire de compensation à injecter dans la chaîne.

Selon un autre aspect, il est proposé une chaîne de réception d'un appareil de communication sans fil incorporant au moins une partie du dispositif de traitement telle que défini ci-avant.

Selon un mode de réalisation, la chaîne est du type à conversion directe et comporte un premier étage d'amplification couplé à l'antenne de la chaîne, un étage de transposition de fréquence couplé au premier étage d'amplification, et un deuxième étage d'amplification couplé entre l'étage de transposition de fréquence et un étage de conversion analogique-numérique, et la partition de la chaîne comprend une première zone incorporant le premier étage d'amplification et l'étage de transposition de fréquence et une deuxième zone incorporant le deuxième étage d'amplification et l'étage de conversion analogique-numérique.

Selon un autre aspect, il est proposé un appareil de communication sans fil incorporant une chaîne de réception telle que définie ci-avant.

D'autres caractéristiques et avantages de l'invention apparaîtront à l'examen de la description détaillée de modes de mise en oeuvre et de réalisations, nullement limitatifs et des dessins annexés sur lesquels :

- la figure 1 illustre de façon schématique, un mode de réalisation d'un dispositif selon l'invention incorporé dans un mode de réalisation d'une chaîne de réception d'un exemple d'appareil de communication sans fil selon l'invention
- la figure 2 illustre plus en détail une partie de la figure 1,
- les figures 3 et 4 illustrent schématiquement des exemples de mise en oeuvre d'un procédé selon l'invention,
- la figure 5 illustre encore un exemple d'un mode de mise en oeuvre et de réalisation de l'invention, et,
- les figures 6 et 7 illustrent d'autres exemples de partitionnement d'exemples d'une chaîne de réception selon l'invention.

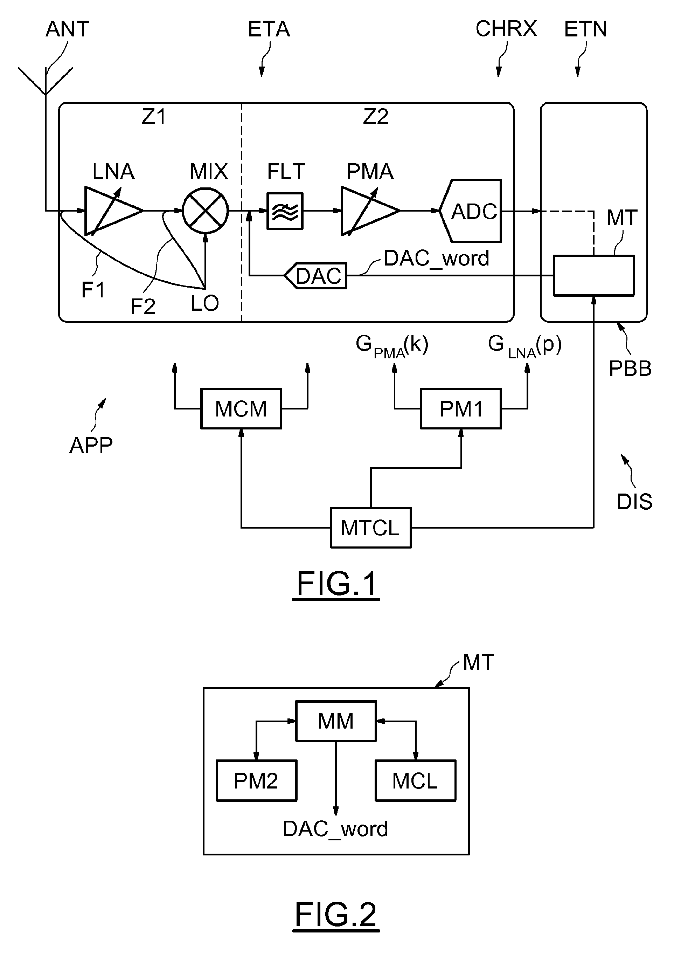

Si l'on se réfère maintenant plus particulièrement à la figure 1, un appareil APP de communication sans fil comporte une chaîne de réception radiofréquence CHRX présentant une architecture du type à conversion directe ou à fréquence intermédiaire nulle (architecture ZIF).

Plus précisément, la partie analogique ETA de la chaîne CHRX comporte un premier amplificateur LNA qui est généralement un amplificateur faible bruit à gain variable, dont l'entrée est couplée à l'antenne ANT.

La sortie de l'amplificateur LNA est couplée à l'entrée d'un étage de transposition de fréquence ou mélangeur MIX qui reçoit par ailleurs le signal de transposition ou signal d'oscillateur local LO de façon à réaliser une transposition directement en bande de base.

Un deuxième étage d'amplification à gain variable PMA est couplé à la sortie du mélangeur MIX par l'intermédiaire d'un filtre passe-bas FLT.

La sortie de l'étage d'amplification PMA est reliée à un étage de conversion analogique numérique ADC connecté en sortie à la partie numérique ETN de la chaîne de réception comportant ici un processeur PBB également communément désigné processeur en bande de base.

Bien entendu, et de façon classique, la chaîne de réception comporte en aval du mélangeur MIX deux voies en quadrature de phase I et Q qui, n'ont pas été représentées de façon séparée sur la figure 1, à des fins de simplification.

Comme on peut le voir sur cette figure 1, le signal d'oscillateur local LO fuit à l'entrée de l'amplificateur LNA (flèche F1) ainsi qu'à l'entrée du mélangeur MIX (flèche F2).

Le signal de fuite à l'entrée de l'amplificateur LNA est amplifié par l'amplificateur LNA et le signal de fuite global subit par conséquent une multiplication par lui-même (auto transposition) à l'intérieur du mélangeur MIX ce qui est par conséquent l'une des sources du décalage en courant continu DCO (communément désigné par l'homme du métier sous la dénomination anglo-saxonne de « DC offset »).

Aussi, est-il prévu un dispositif DIS de traitement du décalage en courant continu DCO de la chaîne de réception radio fréquence CHRX.

Comme on le verra plus en détail ci-après, ce dispositif utilise instamment un partitionnement de la partie analogique ETA de la chaîne de réception CHRX en plusieurs zones.

Dans l'exemple illustré sur la figure 1, le partitionnement est effectué en deux zones Z1 et Z2.

Plus précisément, dans l'exemple décrit ici qui est uniquement illustratif et non limitatif, la première zone Z1 qui est la zone la plus proche de l'antenne ANT, comporte l'amplificateur LNA et le mélangeur MIX tandis que la deuxième zone Z2 comporte notamment l'amplificateur à gain variable PMA et l'étage de conversion analogique numérique ADC.

Le dispositif DIS comporte alors des moyens d'étalonnage aptes à effectuer un étalonnage de la compensation élémentaire de décalage en courant continu à appliquer à ladite chaîne dans une plage de fonctionnement d'une zone Zi. Comme on le verra plus en détail ci-après ces moyens d'étalonnage sont répartis notamment au sein de moyens de traitement MT réalisés par exemple de façon logicielle au sein du processeur en bande de base PBB.

Le dispositif DIS comporte en outre des moyens de commande MCM aptes à limiter la plage de fonctionnement d'une zone à une plage de fonctionnement minimale (par exemple placer la zone dans un état d'arrêt de fonctionnement ou dans un état de fonctionnement à gain minimal).

Des moyens de contrôle MCTL sont aptes, pour chaque zone, à activer les moyens d'étalonnage et à activer les moyens de commande pour les autres zones.

Enfin, des moyens de détermination, également par exemple incorporés de façon logicielle au sein des moyens de traitement MT, sont aptes à déterminer la compensation de décalage en courant continu à appliquer à ladite chaîne CHRX dans toute sa plage de fonctionnement à partir desdites compensations élémentaires.

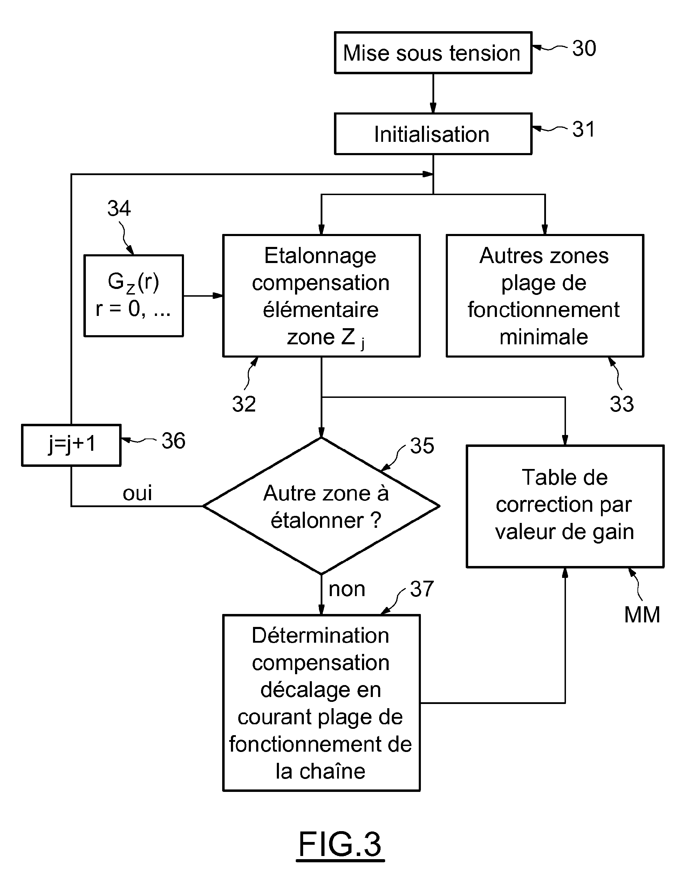

On se réfère maintenant plus particulièrement à la figure 3 pour illustrer un mode de mise en oeuvre d'un procédé selon l'invention.

Après mise sous tension de l'appareil APP et après une étape d'initialisation classique 31 au cours de laquelle le récepteur se stabilise notamment, on procède à l'étalonnage des compensations élémentaires de chacune des zones Zj de la partie analogique ETA de la chaîne de réception CHRX (étape 32).

A cet égard, lorsque l'on procède à l'étalonnage de la compensation élémentaire d'une zone Zj, la plage de fonctionnement des autres zones est limitée à une plage de fonctionnement minimale dont on reviendra plus en détail ci-après sur les caractéristiques (étape 33).

L'étalonnage de la compensation élémentaire associé à la zone Zj en cours d'étalonnage s'effectue par exemple en faisant varier le gain des éléments à gain variable de cette zone Zj dans leur plage de fonctionnement (étape 34).

Et, pour chaque valeur de gain $G_Z(r)$ de la zone Zj, r variant de zéro au nombre de valeurs de gains possibles, on mesure le niveau de décalage en courant continu résultant de cette valeur de gain et l'on détermine la valeur élémentaire de compensation à injecter dans la chaîne de réception.

Toutes ces valeurs élémentaires de compensation sont alors rangées dans une table de correction mémorisée par exemple dans une mémoire MM.

On procède ensuite successivement aux étalonnages des compensations élémentaires des autres zones et, lorsque toutes les zones ont été étalonnées, on détermine alors (étape 37) la compensation de décalage en courant pour toute la plage de fonctionnement de la chaîne en utilisant les valeurs élémentaires de compensation obtenues lors des étalonnages élémentaires des différentes zones.

La compensation de décalage en continu à appliquer dans la chaîne est délivrée en sortie d'un étage de conversion numérique-analogique DAC à partir d'un mot numérique de compensation DAC_word délivré au convertisseur DAC par les moyens MT.

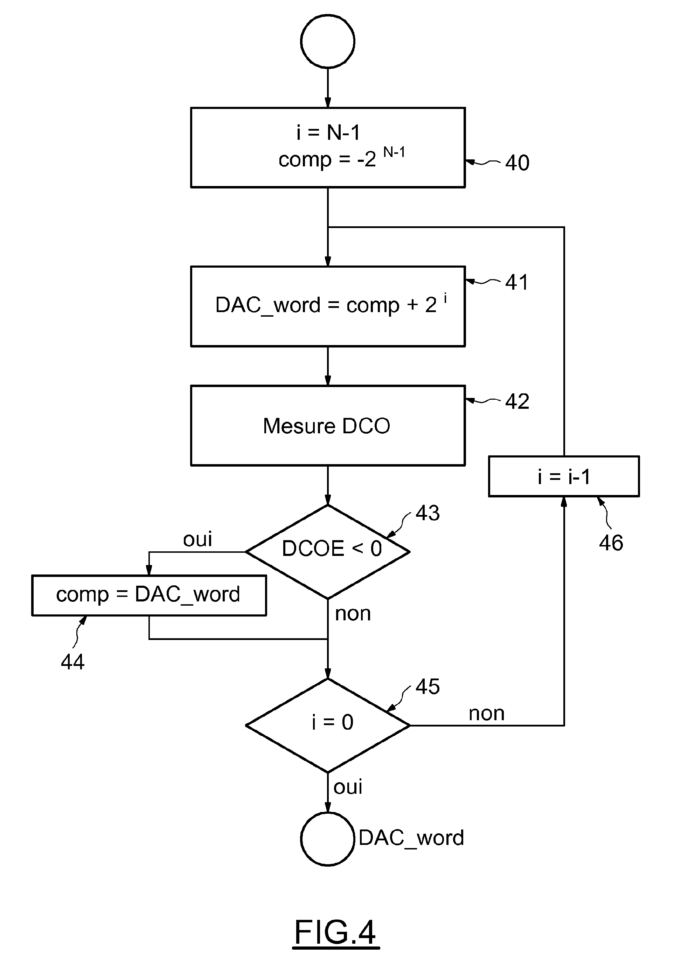

La figure 4 illustre un exemple d'élaboration d'un mot numérique de compensation DAC_word.

Ce mode de mise en oeuvre utilise un procédé classique de dichotomie applicable pour un convertisseur numérique-analogique DAC à N bits signé.

Plus précisément, après avoir initialisé une variable comp et un indice i (étape 40) on fixe la valeur du mot de compensation DAC_word à la somme de la variable comp et de $2^i$ (étape 41).

On mesure ensuite le niveau DCOE de décalage au courant (étape 42).

A cet égard, cette mesure peut être effectuée par tout moyen classique et connu de l'homme du métier. A titre indicatif, cette mesure du niveau de décalage en courant DCO peut être basée sur un filtre passe-bas programmable ou bien une cascade de filtres passe-bas programmables qui peuvent être implémentés de façon numérique dans le processeur en bande de base. Par exemple, le filtre passe-bas le plus simple à utiliser peut être un filtre moyenneur. Cela permet de mesurer le décalage en continu alors que les données utiles et modulées sont présentes dans le signal sans saturation et ainsi d'éviter d'attendre une zone de silence.

Une fois cette mesure effectuée, on compare à zéro (étape 43) la valeur DCOE obtenue a l'issue de l'étape 42 .

Si cette valeur est négative, on donne à la variable comp la valeur du mot DAC_word (étape 44). Puis, dans l'étape 45, on teste la valeur de i à zéro.

Si DCOE est positif ou nul, on passe directement l'étape 45.

Si i est différent de zéro, on décrémente ensuite la valeur de i (étape 46) et tant que la variable i n'a pas atteint la valeur nulle, on répète les étapes 41 à 44.

A la fin de ce processus de dichotomie, on obtient la valeur du mot de compensation DAC_word.

Matériellement, les moyens d'étalonnage comprennent des premiers moyens PM1 (figure 1) aptes à faire varier le gain d'une zone en cours d'étalonnage et des deuxièmes moyens PM2 aptes, pour chaque valeur de gain, à déterminer la valeur élémentaire de compensation à injecter dans la chaîne, valeur élémentaire de compensation obtenue à partir du mot DAC_word.

Ces moyens PM1 et PM2 peuvent être également réalisés sous forme logicielle par exemple.

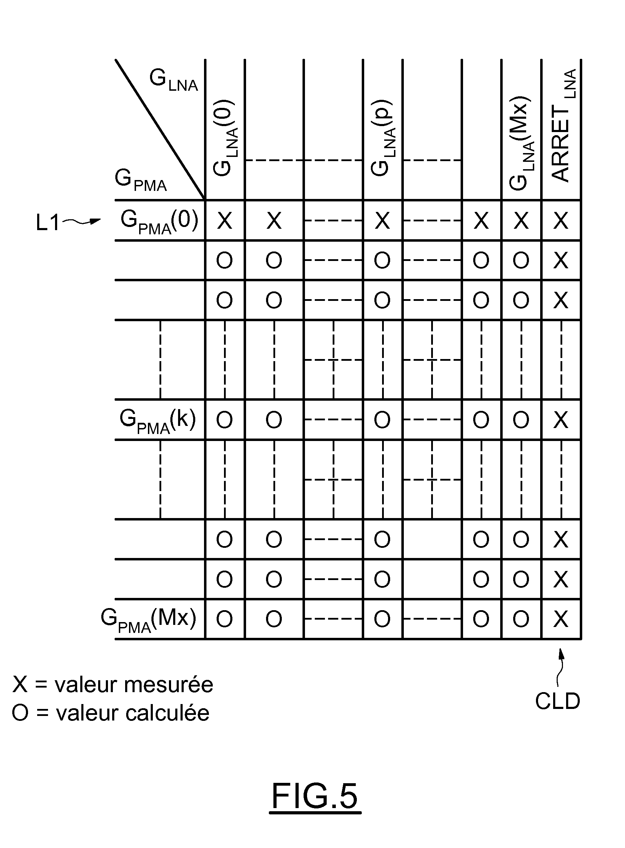

On se réfère maintenant plus particulièrement à la figure 5 pour illustrer un exemple de traitement du décalage en courant continu qui se réfère plus particulièrement à l'architecture de la figure 1.

Bien que cela ne soit pas indispensable, on commencera à étalonner les zones en partant de la zone la plus éloignée de l'antenne.

Dans le cas présent, on va donc commencer à étalonner la zone Z2 c'est-à-dire celle qui comporte notamment l'amplificateur PMA.

Pour cela, comme indiqué précédemment, on va limiter la plage de fonctionnement des éléments de la zone Z1 à une plage de fonctionnement minimale. Dans le cas présent, puisque la zone Z1 se trouve en amont de la zone Z2, on arrêtera purement et simplement le fonctionnement de l'amplificateur LNA (désigné par $LNA_{off}$ dans la suite).

Les moyens PM1 font alors varier le gain de l'amplificateur PMA dans sa plage de fonctionnement depuis sa valeur minimale $G_{PMA}(O)$ jusqu'à sa valeur maximale $G_{PMA}(Mx)$. Pour chacune des valeurs de gain $G_{PMA}(k)$ on mesure le DCO résiduel et on détermine le mot de compensation DAC_word. On obtient alors toutes les valeurs de compensation mesurées marquées d'une croix dans la dernière colonne CLD de la table de correction de la figure 5.

Une fois cet étalonnage de zone effectué, on passe à l'étalonnage de la zone Z1.

Pour ce faire, et puisque la zone Z2 se trouve cette fois-ci en aval de la zone Z1, on va de préférence limiter le gain de l'amplificateur PMA. On choisira par exemple de fixer ce gain à sa valeur minimale $G_{PMA}(0)$.

On fait alors varier le gain de l'amplificateur LNA dans sa plage de fonctionnement avec un pas choisi entre la valeur minimale $G_{LNA}(0)$ et sa valeur maximale $G_{LNA}(Mx)$.

Et, pour chaque valeur de gain $G_{LNA}(p)$ on mesure le DCO résiduel et on détermine le mot de compensation DAC_word.

On obtient alors toutes les valeurs mesurées marquées d'une croix et figurant dans la première ligne L1 de la table de correction de la figure 5.

Une fois ces deux étalonnages effectués, on va calculer les autres valeurs de compensation marquées d'un rond dans la table de la figure 5, et valables pour toutes les autres combinaisons de gain.

Ces valeurs calculées vont l'être par des moyens MCL incorporés dans les moyens de traitement MT (figure 2).

Ces valeurs calculées vont être également stockées dans la table de correction mémorisée dans la mémoire MM.

Plus précisément, si on désigne par $DCO_{comp}(G_{LNA}, G_{PMA})$ la valeur de compensation à appliquer dans la chaîne CHRX pour une valeur quelconque du gain de l'amplificateur LNA et pour une valeur quelconque de l'amplificateur PMA, cette valeur $DCO_{comp}(G_{LNA}, G_{PMA})$ est définie par la formule I ci-dessous

$$DCO_{comp}(G_{LNA}, G_{PMA}) = DCO_{comp}(LNA_{off}, G_{PMA}) + DCO_{comp}(G_{LNA}, G_{PMA}(0)) \ (I)$$

dans laquelle $DCO_{comp}(LNA_{off}, G_{PMA})$ représentent les valeurs de compensation mesurées avec l'amplificateur LNA arrêté (dernière colonne CLD de la table de la figure 5) et dans laquelle $DCO_{comp}, (G_{LNA}, G_{PMA}(0))$ représentent les valeurs de compensation mesurées avec le gain minimal pour l'amplificateur PMA(valeur de la première ligne L1 de la table de la figure 5).

Bien que la formule (I) donne toute satisfaction, il est possible d'améliorer encore la précision de calcul de la valeur de compensation résultante en soustrayant, dans la partie droite de la formule (I), le terme $DCO_{comp}$ ($LNA_{off}$, $G_{PMA}(0)$).

A titre d'exemple non limitatif, le signal présent à l'antenne en fonctionnement normal peut être un signal WiMAX. La norme WiMAX offre les propriétés suivantes :

- absence de décalage en courant continu au niveau de la chaîne d'émission et en cas d'erreur de fréquence porteuse, la composante de courant continu maximum présente au niveau de la chaîne de réception est très faible comparée au niveau du signal total,
- distribution du type gaussienne dans le domaine temporel,
- distribution quasi plate dans le domaine fréquentiel.

On pourra également par exemple faire varier le gain de l'amplificateur PMA de 4 à 30dB par pas de 2dB.

Par ailleurs, bien que cela ne soit pas représenté sur la figure 1, la chaîne de réception CHRX comporte généralement un module de tête connu par l'homme de métier sous la dénomination anglo-saxonne de « Front End Module »), qui permet de sélectionner la bande à démoduler à travers des filtres. Et, la plupart des modules de tête permettent d'adresser plusieurs bandes de fréquence d'une ou de plusieurs normes de transmission. Le module de tête comporte alors des filtres commutables. Et, de tels filtres commutables apportent, selon la position sur laquelle ils sont commutés, une isolation supplémentaire de l'ordre de 20 à 30dB.

Ainsi, dans une chaîne de réception bi-mode, par exemple un mode WiMAX et un mode GSM, on commutera le module de tête sur la position GSM ce qui permettra d'apporter cette isolation supplémentaire de 20 à 30dB dans l'application WiMAX pour l'étalonnage du DCO de réception. Cette commutation peut s'effectuer durant la phase d'initialisation 31 (figure 3). Une telle isolation supplémentaire contribue encore à éviter une saturation de l'étage de conversion analogique numérique ADC de la chaîne de réception.

Dans l'exemple qui vient d'être décrit, lors de l'étalonnage de la zone Z2, on a fait varier le gain de l'amplificateur PMA dans toute sa plage de valeurs de gain. Cela étant, il serait possible de n'utiliser que quelques valeurs de gain de cette plage pour mesurer les valeurs du DCO résiduel et de déterminer ensuite par calcul les autres valeurs de compensation.

De même, pour améliorer encore la précision de compensation, il serait possible, dans l'hypothèse où l'on ne sature pas l'étage de conversion analogique numérique ADC, d'effectuer lors de l'étalonnage de la zone Z1, des mesures du DCO résiduel en plaçant successivement l'amplificateur PMA dans sa valeur de gain minimale puis dans une ou plusieurs valeurs de gain immédiatement supérieure. On obtiendrait alors un nombre plus important de valeurs mesurées ce qui limiterait le nombre de valeurs de la table à calculer.

Par ailleurs, l'invention n'est pas limitée au type de configuration de la figure 1.

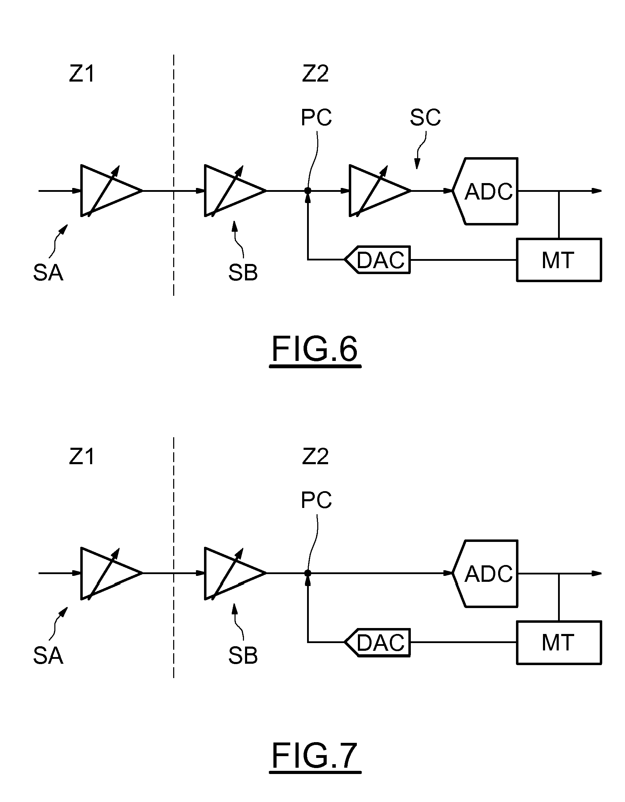

A titre indicatif, on pourrait appliquer le procédé selon l'invention à une chaîne du type de celle illustrée sur la figure 6 partitionnée également en zones Z1 et Z2 mais, cette fois-ci, un élément à gain variable SB de la zone Z2 est disposé en amont du point de compensation PC ce qui n'était pas le cas sur la figure 1.

Si l'on suppose que la zone Z1 comporte un élément à gain variable SA, et que la zone Z2 comporte en outre un élément à gain variable ZC situé en aval du point de compensation PC, alors la valeur de compensation $DCO_{comp}$ ($G_A$,$G_B$, $G_C$) qu'il convient d'appliquer à la chaîne pour toute valeur des gains $G_A$, $G_B$, $G_C$ des éléments SA, SB et SC, est défini en première approximation par la formule (II) ci-dessous.

$$DCO_{comp}(G_A,G_B,G_C) = DCO_{comp}(SA_{off},G_B,G_C)+(G_B/G_{Bmin})DCO_{comp}(G_A,G_{Bmin},G_{Cmin}) \quad (II)$$

On voit alors que cette valeur de compensation globale est une somme pondérée par le rapport $G_B/G_{Bmin}$ c'est-à-dire par le gain de l'élément SB situé en amont du point de compensation PC.

Dans cette formule (II), $SA_{off}$ indique que l'élément SA est en arrêt et $G_{Bmin}$ et $G_{Cmin}$ indiquent les valeurs de gain minimum pour les éléments $S_B$ et $S_C$.

I1 serait également possible, comme illustré sur la figure 7, de ne pas avoir d'éléments à gain variable en aval du point de compensation PC de la zone Z2.

Dans ce cas, $DCO_{comp}$ ($G_A$, $G_B$) est défini en première approximation par la formule (III) ci-dessous :

$$DCO_{comp}(G_A, G_B) = DCO_{comp}(SA_{off}, G_B) + (G_B/G_{Bmin})DCO_{comp}(G_A, G_{Bmin}) \qquad \text{(III)}$$

**Revendications**

1. Procédé de traitement du décalage en courant continu d'une chaîne de réception radiofréquence, **caractérisé par le fait qu'**il comprend un partitionnement de la partie analogique (ETA) de la chaîne de réception (CHRX) en plusieurs zones (Z1, Z2) et, pour chaque zone ($Z_j$), un étalonnage (32) de la compensation élémentaire de décalage en courant continu à appliquer à ladite chaîne dans une plage de fonctionnement de ladite zone, la plage de fonctionnement des autres zones étant limitées à une plage de fonctionnement dite minimale (33), et une détermination (37) de la compensation de décalage en courant continu à appliquer à ladite chaîne dans toute sa plage de fonctionnement à partir desdites compensations élémentaires.

2. Procédé selon la revendication 1, dans lequel ladite partie analogique comprenant un étage de conversion analogique-numérique (ADC), on choisit les caractéristiques de la plage de fonctionnement minimale de chaque zone de façon à éviter une saturation de l'étage de conversion analogique numérique (ADC).

3. Procédé selon la revendication 1 ou 2, dans lequel la plage de fonctionnement minimale d'une zone ($Z_j$) comprend un arrêt du fonctionnement de cette zone ou un fonctionnement de cette zone avec un gain minimal ou avec un gain pouvant varier dans une plage de gains réduite délimitée par ladite valeur minimale et une valeur limite.

4. Procédé selon la revendication 3, dans lequel on arrête le fonctionnement des zones situées en amont de la zone à étalonner et on fait fonctionner les zones situées en aval de la zone à étalonner, avec un gain minimal ou dans la plage de gains réduite.

5. Procédé selon l'une des revendications précédentes, dans lequel l'étalonnage de la compensation élémentaire d'une zone ($Z_j$) comprend la détermination d'un jeu de valeurs de compensation élémentaires à injecter dans la chaîne, et la détermination (37) de la compensation de décalage en courant continu à appliquer à ladite chaîne dans toute sa plage de fonctionnement comporte des sommations, éventuellement pondérées, desdites valeurs de compensations élémentaires.

6. Procédé selon la revendication 5, dans lequel l'étalonnage (32) de la compensation élémentaire d'une zone comprend une variation du gain de ladite zone et pour chaque valeur de gain une détermination d'une valeur de compensation élémentaire à injecter dans la chaîne.

7. Procédé selon l'une des revendications précédentes, dans lequel la chaîne de réception (CHRX) est du type à conversion directe.

8. Procédé selon la revendication 7, dans lequel la chaîne comporte un premier étage d'amplification (LNA) couplé à l'antenne de la chaîne, un étage de transposition de fréquence (MIX) couplé au premier étage d'amplification, et un deuxième étage d'amplification (PMA) couplé entre l'étage de transposition de fréquence et un étage de conversion analogique-numérique (ADC), et on partitionne la chaîne en une première zone (Z1) incorporant le premier étage (LNA) d'amplification et l'étage de transposition de fréquence (MIX) et une deuxième zone (Z2) incorporant le deuxième étage d'amplification (PMA) et l'étage de conversion analogique-numérique (ADC).

9. Dispositif de traitement du décalage en courant continu d'une de chaîne de réception radiofréquence, **caractérisé par le fait que** la partie analogique (ETA) de la chaîne de réception (CHRX) étant partitionnée en plusieurs zones (Z1, Z2), le dispositif comprend des moyens d'étalonnage aptes à effectuer un étalonnage de la compensation élémentaire de décalage en courant continu à appliquer à ladite chaîne dans une plage de fonctionnement d'une zone, des moyens de commande (MCM) aptes à limiter la plage de fonctionnement d'une zone à une plage de fonctionnement dite minimale, des moyens de contrôle (MCTL) aptes, pour chaque zone, à activer les moyens d'étalonnage et activer les moyens de commande pour les autres zones, et des moyens de détermination aptes à déterminer la compensation de décalage en courant continu à appliquer à ladite chaîne dans toute sa plage de fonctionnement à partir desdites compensations élémentaires.

10. Dispositif selon la revendication 9, dans lequel ladite partie analogique (ETA) comprend un étage de conversion analogique-numérique (ADC), et les caractéristiques de la plage de fonctionnement minimale de chaque zone sont choisies de façon à éviter une saturation de l'étage de conversion analogique numérique (ADC).

**11.** Dispositif selon la revendication 9 ou 10, dans lequel les moyens de commande (MCM) sont aptes à arrêter le fonctionnement d'une zone ou à la faire fonctionner avec un gain minimal ou avec un gain pouvant varier dans une plage de gains réduite délimitée par ladite valeur minimale et une valeur limite.

**12.** Dispositif selon la revendication 11, dans lequel les moyens de commande (MCM) sont aptes à arrêter le fonctionnement des zones situées en amont de la zone à étalonner et à faire fonctionner les zones situées en aval de la zone à étalonner, avec un gain minimal ou dans la plage de gains réduite.

**13.** Dispositif selon l'une des revendications 9 à 12, dans lequel les moyens d'étalonnage sont aptes à déterminer pour une zone un jeu de valeurs de compensation élémentaires à injecter dans la chaîne, et lesdits moyens de détermination comportent des moyens de sommation (MLC) aptes à effectuer des sommations, éventuellement pondérées, desdites valeurs de compensations élémentaires.

**14.** Dispositif selon la revendication 13, dans lequel les moyens d'étalonnage comprennent des premiers moyens (PM1) aptes à faire varier le gain d'une zone et des deuxièmes moyens (PM2) aptes, pour chaque valeur de gain, à déterminer une valeur élémentaire de compensation à injecter dans la chaîne.

**15.** Chaîne de réception d'un appareil de communication sans fil, **caractérisée par le fait qu'**elle incorpore au moins une partie du dispositif selon l'une des revendications 9 à14.

**16.** Chaîne de réception selon la revendication 15, dans lequel la chaîne est du type à conversion directe et comporte un premier étage d'amplification (LNA) couplé à l'antenne (ANT) de la chaîne, un étage de transposition de fréquence (MIX) couplé au premier étage d'amplification, et un deuxième étage d'amplification (PMA) couplé entre l'étage de transposition de fréquence et un étage de conversion analogique-numérique (ADC), et la partition de la chaîne comprend une première zone (Z1) incorporant le premier étage d'amplification (LNA) et l'étage de transposition de fréquence (MIX) et une deuxième zone (Z2) incorporant le deuxième étage d'amplification (PMA) et l'étage de conversion analogique-numérique (ADC).

**17.** Appareil de communication sans fil, incorporant une chaîne de réception selon la revendication 15 ou 16.

## FIG.1

## FIG.2

Mise sous tension — 30

Initialisation — 31

34

$G_z(r)$
r = 0, ...

Etalonnage compensation élémentaire zone $Z_j$

32

Autres zones plage de fonctionnement minimale

33

j=j+1 — 36

35

oui

Autre zone à étalonner ?

Table de correction par valeur de gain

MM

non — 37

Détermination compensation décalage en courant plage de fonctionnement de la chaîne

FIG.3

$$i = N-1$$
$$comp = -2^{N-1}$$

40

$$DAC\_word = comp + 2^{i}$$

41

Mesure DCO

42

DCOE < 0

43

oui

comp = DAC_word

44

non

i = i-1

46

i = 0

45

non

oui

DAC_word

FIG.4

| $G_{LNA}$ / $G_{PMA}$ | $G_{LNA}(0)$ | | | $G_{LNA}(p)$ | | | $G_{LNA}(Mx)$ | $ARRET_{LNA}$ |
|---|---|---|---|---|---|---|---|---|
| L1 → $G_{PMA}(0)$ | X | X | ----- | X | ----- | X | X | X |
| | O | O | ----- | O | ----- | O | O | X |
| | O | O | ----- | O | ----- | O | O | X |
| | | | | | | | | |
| $G_{PMA}(k)$ | O | O | ----- | O | ----- | O | O | X |
| | | | | | | | | |
| | O | O | ----- | O | | O | O | X |
| | O | O | ----- | O | | O | O | X |
| $G_{PMA}(Mx)$ | O | O | ----- | O | ----- | O | O | X |

CLD

X = valeur mesurée
O = valeur calculée

## FIG.5

EP 2 148 481 A1

Z1                    Z2

                            PC          SC

SA          SB

## FIG.6

Z1                    Z2

                            PC

SA          SB

## FIG.7

14

Europäisches
Patentamt

European
Patent Office

Office européen
des brevets

# RAPPORT DE RECHERCHE EUROPEENNE

Numéro de la demande

EP 08 30 5422

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 128 353 A (HO KENNETH YIU-KWONG [US] ET AL) 3 octobre 2000 (2000-10-03) * colonne 7, ligne 18 - ligne 50 * * figure 7 * ----- | 1-17 | INV. H04L25/06 H03D3/00 |
| A | US 2004/264608 A1 (HABUKA TOSHIHITO [JP] ET AL) 30 décembre 2004 (2004-12-30) * alinéa [0097] - alinéa [0104] * * figures 1,6a,7,10 * ----- | 1-17 | |

DOMAINES TECHNIQUES
RECHERCHES (IPC)

H04L
H03D

Le présent rapport a été établi pour toutes les revendications

| Lieu de la recherche | Date d'achèvement de la recherche | Examinateur |
|---|---|---|
| La Haye | 24 avril 2009 | Marselli, Marco |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 30 5422

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-04-2009

| Document brevet cité<br>au rapport de recherche | | Date de<br>publication | Membre(s) de la<br>famille de brevet(s) | | Date de<br>publication |
|---|---|---|---|---|---|
| US 6128353 | A | 03-10-2000 | AUCUN | | |
| US 2004264608 | A1 | 30-12-2004 | JP<br>US | 2005020119 A<br>2009080577 A1 | 20-01-2005<br>26-03-2009 |

EPO FORM P0460

Pour tout renseignement concernant cette annexe : voir Journal Officiel de l'Office européen des brevets, No.12/82